# EUROPÄISCHE PATENTSCHRIFT

(11) **EP 1 219 342 B1**
(45) Veröffentlichungstag und Bekanntmachung des Hinweises auf die Patenterteilung: **28.05.2003**
(21) Anmeldenummer: 00128271.4
(22) Anmeldetag: 22.12.2000
(51) Int. Cl.: B01D 63/10, B01D 65/00

(54) **Vorrichtung zur Aufbereitung einer Flüssigkeit**
Liquid treatment apparatus
Dispositif de traitement de liquides

(43) Veröffentlichungstag der Anmeldung: 03.07.2002
(73) Patentinhaber: Grünbeck Wasseraufbereitung GmbH, D-89420 Höchstädt (DE)
(72) Erfinder: Weinberger, Helmut, 89423 Gundelfingen (DE); Pöpperl, Markus, 86830 Schwabmünchen (DE); Harlander, Peter, 86405 Meitingen (DE)
(74) Vertreter: Prüfer, Lutz H., Dipl.-Phys.

(56) Entgegenhaltungen:
- EP-A- 0 815 928
- EP-A- 0 818 228
- WO-A-98/46338
- WO-A-99/43421
- US-A- 3 542 203
- US-A- 4 594 161
- US-A- 5 078 876
- US-A- 5 389 260
- US-A- 5 891 334
- US-A- 5 914 041

## Beschreibung

Die Erfindung betrifft eine Vorrichtung zur Aufbereitung einer Flüssigkeit, insbesondere zur Aufbereitung von Wasser mit der Membrantechnologie.

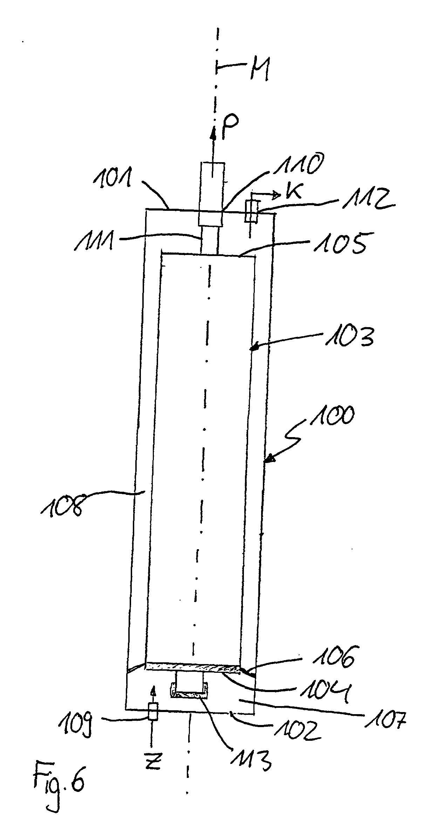

Es sind Vorrichtungen zur Aufbereitung von Wasser bekannt, die nach dem Prinzip der Umkehr-Osmose oder der Nanofiltration arbeiten. Fig. 6 zeigt eine derartige bekannte Vorrichtung. Diese umfaßt ein zylindrisches Druckrohr 100 mit einer Stirnfläche 101 an einem Ende und einer dieser gegenüberliegenden Rückfläche 102 am anderen Ende. Koaxial zur Mittenachse M ist in dem Druckrohr eine zylindrische Membran 103 bzw. ein Membranmodul mit einer der Rückfläche 102 zugewandten Eintrittsseite 104 und einer der Stirnfläche 101 zugewandten Austrittsseite 105 angeordnet, die beispielsweise als Wickelmembran ausgebildet ist. Der Durchmesser und die Länge der Membran 103 sind kleiner als der Durchmesser und die Länge des Druckrohrs 100. Am Rand ihrer der Rückfläche zugewandten Eintrittsseite 104 ist zwischen der Membran 103 und der Innenwand des Druckrohrs eine umlaufende Dichtlippe 106 vorgesehen, die den Raum zwischen Membran 103 und Innenwand des Druckrohrs in einen ersten Raum 107, der sich von der Rückfläche 102 zu der Eintrittsseite 104 der Membran erstreckt und einen zweiten Raum 108, der sich zwischen der Außenfläche der Membran bis zur Stirnfläche 101 des Druckrohrs erstreckt, unterteilt. In der Rückfläche 102 des Druckrohrs ist eine Zuleitung 109 zum Zuführen des aufzubereitenden Wassers bzw. Rohwassers über den ersten Raum 107 an die eine Eintrittsseite 104 der Membran vorgesehen. In der Stirnfläche 101 des Druckrohrs ist eine erste Ableitung 110 vorgesehen, die mit einem koaxialen Permeatkanal 111 der Membran an deren Austrittsseite 105 in Verbindung steht, zum Ableiten des als Permeat bezeichneten gereinigten Wassers. Ferner ist in der Stirnfläche des Druckrohrs eine zweite Ableitung 112, die über den zweiten Raum 108 mit der als Konzentratausgang fungierenden Austrittsseite 105 der Membran in Verbindung steht, zur Ableitung des als Konzentrat bezeichneten Restwassers vorgesehen. Die Membran weist an ihrer Eintrittsseite 104 einen weiteren Permeatausgang auf, der durch eine Blindkappe 113 verschlossen ist. Das gesamte Druckrohr 100 ist üblicherweise vertikal angeordnet.

Im Betrieb wird aufzubereitendes Wasser unter Druck von unten über die Zuleitung 109 und den ersten Raum 107 der Eintrittsseite 104 der Membran zugeführt und durch diese in Permeat und Konzentrat getrennt, das jeweils oben durch die Permeatableitung 110 bzw. die Konzentratableitung 112 an der Austrittsseite 105 abgeleitet wird. Der zweite Raum 108 bildet in einem Bereich zwischen Membranaußenfläche und Druckrohr einen Totraum in dem stehendes Wasser vorhanden ist. Dadurch besteht ein Risiko des Auftretens von Biofouling. Ferner erfordern die Zu- bzw. Ableitungen an beiden Seiten des Druckrohres Platz. Beim Verschalten mehrerer Druckrohre, z.B. in Serienschaltung ist eine wiederum Platz benötigende Verrohrung erforderlich. Außerdem ist bei der bekannten Vorrichtung eine Abdichtung zwischen Druckrohr und Membran erforderlich. Zudem ist durch die stirnseitige Anströmung 109 (Z) und dem schmalen Vorraum 107 eine homogene Wasserverteilung nicht gewährleistet.

Eine Vorrichtung zur Aufbereitung einer Flüssigkeit gemäß den Merkmalen des Oberbegriffs des Anspruchs 1 ist bekannt aus US-A-3 542 203, US-A-5 389 260 und US-A-5 891 334. Die US-A-4 594 161 offenbart eine Flüssigkeitsaufbereitungsvorrichtung mit jeweils einer umfangsseitig angeordneten Zu- und Ableitung, wobei auch eine Serienanordnung möglich ist.

Ferner offenbaren die US 5 914 041, die WO 9846338 A und WO 9943421 A Vorrichtungen zur Aufbereitung einer Flüssigkeit mit den Merkmalen des Oberbegriffs des Anspruchs 1, wobei die Zu- bzw. Ableitungen umfangsseitig relativ zur Gehäuselängsachse vorgesehen sind.

Es ist Aufgabe der Erfindung, eine verbesserte Vorrichtung zur Aufbereitung einer Flüssigkeit, insbesondere zur Aufbereitung von Wasser mit der Membrantechnologie bereitzustellen.

Die Aufgabe wird gelöst durch eine Vorrichtung nach Patentanspruch 1. Weiterbildungen der Erfindung sind in den Unteransprüchen angegeben.

Ein wesentlicher Vorteil der erfindungsgemäßen Vorrichtung liegt darin, daß alle Anschlüsse auf einer Seite liegen und somit eine einfache Zugänglichkeit der Anschlüsse gegeben ist.

Weitere Merkmale und Zweckmäßigkeiten der Erfindung ergeben sich aus der Beschreibung von Ausführungsbeispielen anhand der Figuren.

Von den Figuren zeigen:
- Fig. 1:: eine schematische Schnittdarstellung einer erfindungsgemäßen Vorrichtung nach einer Ausführungsform;
- Fig. 2:: eine schematische Schnittdarstellung einer Verteilervorrichtung der Vorrichtung nach Fig. 1;
- Fig. 3:: eine Explosionsdarstellung eines Ausführungsbeispiels der in Fig. 2 gezeigten Verteilervorrichtung;
- Fig. 4:: eine schematische Schnittdarstellung einer Reihenschaltung von Vorrichtungen nach Fig. 1;
- Fig. 5:: eine schematische Schnittdarstellung einer Parallelschaltung von Vorrichtungen nach Fig. 1; und
- Fig. 6:: eine schematische Darstellung einer bekannten Vorrichtung.

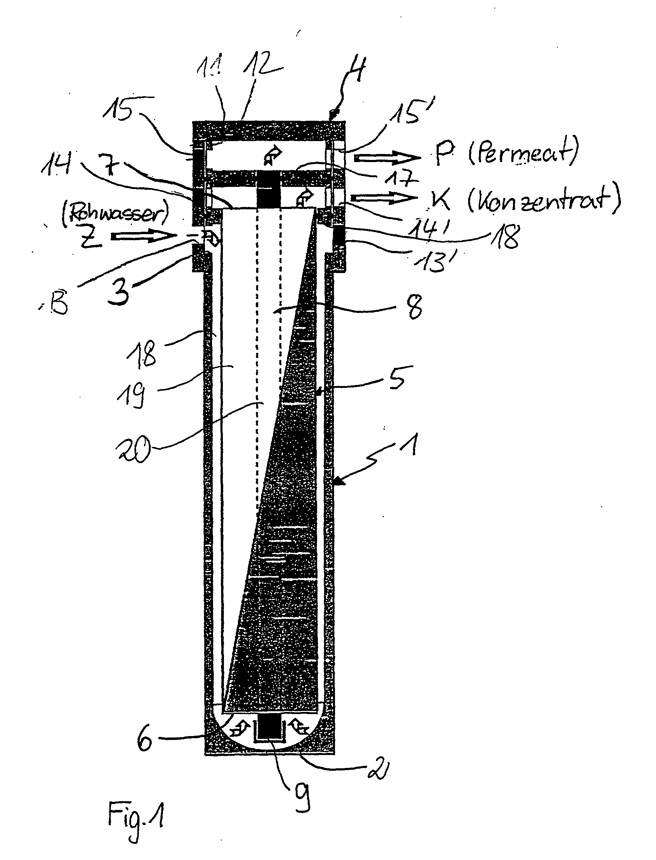

Fig. 1 zeigt eine erfindungsgemäße Vorrichtung zur Aufbereitung von Wasser. Die Vorrichtung umfaßt ein zylindrisches Druckrohr 1, welches im Betriebsstellung in der Regel vertikal angeordnet ist. Das Druckrohr 1 ist an seinem einen im Betriebszustand unteren Ende 2, geschlossen und weist an seinem gegenüberliegenden Ende einen Bereich 3 mit einem größeren Durchmesser auf, der als Verteilervorrichtung 4 dient. In dem Druckrohr 1 ist eine zylindrische Membran 5 bzw. ein Membranmodul, insbesondere eine Wickelmembran, koaxial zum Druckrohr ausgerichtet. Der Durchmesser der Membran 5 ist kleiner als der Innendurchmesser des Druckrohres und die Länge der Membran ist derart, daß die Membran in den Bereich 3 des Druckrohres, der die Verteilervorrichtung 4 bildet, hineinragt. Das dem geschlossenen Ende 2 des Druckrohrs zugewandte untere Ende 6 der Membran bildet die Eintrittsseite für das aufzubereitende Wasser bzw. Rohwasser. Das gegenüberliegende Ende 7 der Membran bildet die Austrittsseite für das Konzentrat. Koaxial ist ein sich durch die Membran erstreckender Permeatkanal 8 vorgesehen, der an der Eintrittsseite 6 durch eine Blindkappe 9 verschlossen ist und an der Austrittsseite 7 in die Verteilervorrichtung 4 hineinragt. Die Membran 5 ist ferner im Bereich des geschlossenen Endes 2 des Druckrohres in einer Halterung gehalten.

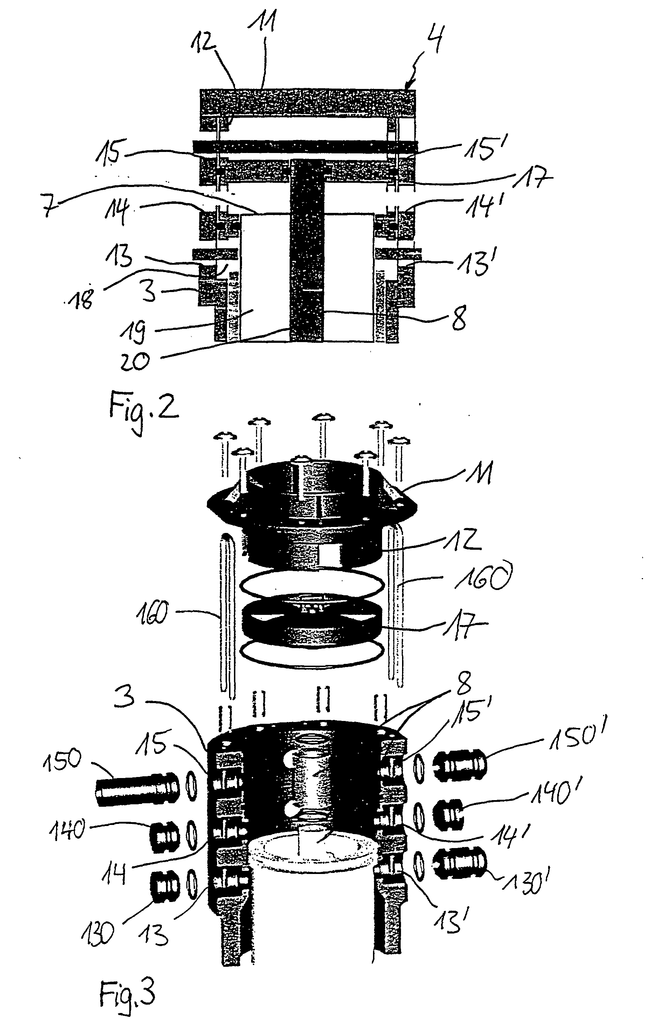

Die Verteilervorrichtung 4 wird nun anhand eines in den Figuren 2 und 3 gezeigten Ausführungsbeispiels beschrieben. Die Verteilervorrichtung 4 besteht aus dem Bereich 3 des Druckrohres mit dem vergrößerten Durchmesser und einem abnehmbaren Deckel 11 mit einem stutzenförmigen unterbrochen ausgebildeten Ansatz 12, der so bemessen ist, daß er formschlüssig in das Druckrohr einsetzbar ist. In dem Bereich 3 des Druckrohres sind auf unterschiedlicher Höhe des Druckrohres drei Bohrungen 13, 14, 15 in Längsrichtung des Druckrohres übereinanderliegend vorgesehen und entsprechend auf der gegenüberliegenden Seite drei weitere Bohrungen 13', 14', 15'. Weitere, den Bohrungen 13, 14, 15 entsprechende Bohrungen können in Umfangsrichtung vorgesehen sein. Zuleitungs- und Ableitungsrohre 130, 140, 150, 130', 140', 150' können, wie in Fig. 3 gezeigt ist, mittels einer einfachen Steckverbindung in die Bohrungen eingesetzt werden und über Bügel 160 fixiert werden. Die Membran 5 ist an ihrem in die Verteilervorrichtung hineinragenden Ende oberhalb der Bohrung 13, flüssigkeitsdicht gegen die Wand der Verteilervorrichtung abgedichtet. Dadurch wird eine erste Ebene bzw. ein erster Bereich in der Verteilervorrichtung gebildet, der die untersten Bohrungen und damit die Rohwasserzufuhr einschließt. Eine zweite Ebene, bzw. ein zweiter Bereich wird zwischen dem Ende 3 der Membran und einem Dichtelement 17 gebildet, durch das der Permeatausgang 8 hindurchgeführt ist. Diese Ebene enthält die nächsthöhergelegenen Bohrungen 14, 14'. In diese Ebene mündet ferner der Konzentratausgang der Membran. Eine dritte Ebene bzw. ein dritter Bereich wird zwischen dem Deckel 11 und dem Dichtelement 17 gebildet. Diese Ebene beinhaltet die höchstgelegenen Bohrungen 15, 15' und den Permeatausgang der Membran. In der in Fig. 1 gezeigten Ausführungsform bildet die Bohrung 13, die unterhalb der Austrittsseite 7 der Membran liegt eine Zuleitung Z für Rohwasser, während die ihr gegenüberliegende Bohrung 13'durch einen Blindstopfen verschlossen ist. Die der Zuleitung Z gegenüberliegenden Bohrungen 14'und 15', die auf Höhe der Austrittsseite 7 der Membran bzw. auf Höhe des Endes des Permeatkanals 8 liegen bilden eine erste Ableitung K für das Konzentrat bzw. eine zweite Ableitung P für das Permeat. Die diesen gegenüberliegenden Bohrungen 14, 15 sind verschlossen.

Die Verteilervorrichtung kann konstruktiv auch anders ausgelegt werden, entscheidend ist, daß der Rohwasser-, Konzentrat- und Permeatanschluß als drei Ebenen in der Verteilervorrichtung 4 des Druckrohrs 1 ausgebildet sind. Die Verteilervorrichtung 4 ist ferner so ausgebildet, daß dem Rohwasserbereich, dem Konzentratbereich und dem Permeatbereich jeweils ein Ringraum entspricht, der die Mittenachse der Membran ringförmig umgibt. Ein äußerer Ringraum 18 ist zwischen der Innenwand des Druckrohres und der Außenwand der Membran gebildet. Ein mittlerer Ringraum 19 ist zwischen der Außenwand der Membran und dem Permeatkanal gebildet und ein innerer Ringraum 20 ist durch den Permeatkanal gebildet. Ein Vorteil der erfindungsgemäßen Vorrichtung besteht auch in der Variabilität mit der die Anschlüsse belegt sein können. Es können zum Beispiel alle Anschlüsse an einer Längsseite des Druckrohres vorgesehen sein, wodurch es möglich ist, das Druckrohr selbst in ein Gehäuse einzubauen, in dem es an wenigstens drei Seiten von einer Wand umgeben ist.

Im Betrieb wird Rohwasser über die Zuleitung Z in der durch die Verteilervorrichtung gebildeten unteren Ebene unter Druck zugeführt. Es gelangt in den Zwischenraum zwischen Membran und Innenwand des Druckrohres, der den äußeren Ringraum 18 bildet. An der unteren Stirnseite 6 der Membran, die die Eintrittsseite bildet, tritt das Rohwasser in die Membran ein. An der gegenüberliegenden Austrittsseite 7 der Membran tritt das Konzentrat in die nächste Ebene bzw. den zwischen Membran und Dichtelement 17 gebildeten Raum und wird dort über die erste Ableitung K abgeleitet. Das Permeat aus dem Pemeatkanal 8, der den dritten Ringraum bildet wird in die nächsthöhere Ebene zwischen Deckel 11 und Dichtelement 17 geleitet und durch die zweite Ableitung P abgeleitet.

Im Gegensatz zu der bekannten Vorrichtung ist an dem geschlossenen Ende 2 des Druckrohres keine Zuleitung für aufzubereitendes Wasser vorgesehen. Dadurch wird das Rohwasser entlang der Membranaußenwand zugeführt. Es gibt keine Toträume mit stehendem Wasser, wodurch das Risiko des Biofoulings erheblich vermindert wird. Ein weiterer Vorteil der Vorrichtung besteht darin, daß die Membran ringförmig angeströmt wird. Dadurch ist bei der erfindungsgemäßen Vorrichtung eine vollflächige Überströmung der Membran gewährleistet.

Die Anzahl und die Position der Bohrungen in einer Ebene kann unterschiedlich sein um eine Zuleitung oder Ableitung an gewünschten Stellen und in gewünschter Stärke und Art zu ermöglichen.

Durch die Steckverbindungstechnik, wie sie anhand des in Fig. 3 gezeigten Ausführungsbeispiels der Verteilervorrichtung beschrieben wurde, ist es möglich, mehrere Druckrohre einfach und schnell miteinander zu verbinden und dadurch Reihen- oder Parallelschaltungen von Druckrohren zu bilden. Die Steckverbindung hat daher deutliche Vorteile gegenüber einer Verschraubung der Anschlußrohre.

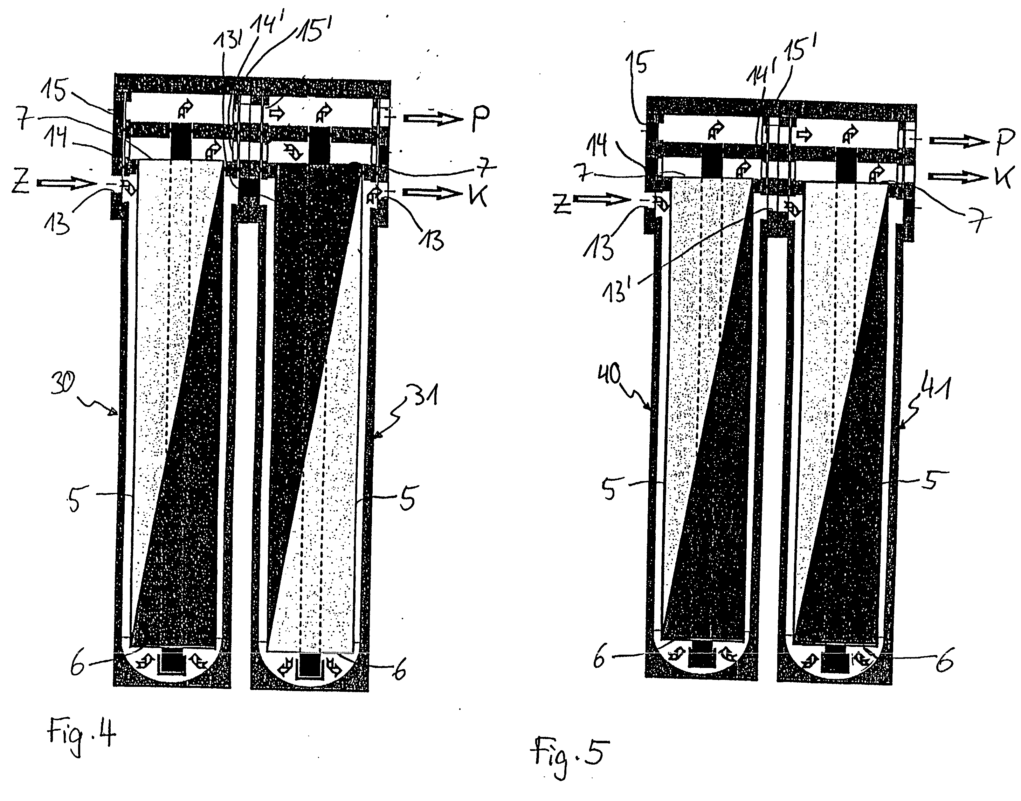

In einer weiteren, in Fig. 4 gezeigten Ausführungsform sind wenigstens zwei Druckrohre 30, 31 in Form einer Serienschaltung miteinander verbunden. Gleiche Teile wie bei dem Druckrohr nach Fig. 1 sind mit gleichen Bezugszeichen versehen.

Das erste Druckrohr 30 ist identisch zu dem Druckrohr gemäß Fig. 1 ausgebildet. Bei dem zweiten Druckrohr 31 ist in der obersten Ebene eine Bohrung 15 nicht verschlossen. Das zweite Druckrohr ist mit dem ersten Druckrohr so verbunden, daß die Bohrungen 14', 15' in der mittleren und der obersten Ebene einander zugewandt sind und miteinander verbunden sind. Somit bildet die Bohrung 14 in dem zweiten Druckrohr 31 eine Zuleitung für Konzentrat, das als "Rohwasser" an der oberen Stirnseite 7 in die Membran 5 des zweiten Druckrohres eintritt. Die untere Stirnseite 6 der Membran fungiert als Austrittsseite für das neu gebildete Konzentrat und die Bohrung 13 als erste Ableitung K für dieses Konzentrat. Die obere Ebene des ersten Druckrohrs 30 ist mit der oberen Ebene des zweiten Druckrohrs 31 über die Bohrungen 15 verbunden, wodurch es möglich ist, daß sich der Permeatstrom des ersten Druckrohres zum Permeatstrom des zweiten Druckrohres addiert.

Im Betrieb erfolgt die Zuleitung von Rohwasser über die Zuleitung Z des ersten Druckrohres. Das aus dem ersten Druckrohr in der mittleren Ebene austretende Konzentrat wird dem zweiten Druckrohr in der mittleren Ebene als Rohwasser zugeführt, wobei es die Membran 5 in dem zweiten Druckrohr von oben nach unten durchströmt und an der Bohrung 13 der unteren Ebene als neues Konzentrat austritt. Das Permeat des zweiten Druckrohrs tritt in der obersten Ebene aus und addiert sich zu dem Permeatstrom aus dem ersten Druckrohr. Es können auch noch weitere Druckrohre angeschlossen sein, wobei die Membran eines dritten Druckrohrs wieder von unten nach oben durchströmt wird.

Fig. 5 zeigt eine weitere Ausführungsform der Erfindung, bei der wenigstens zwei Druckrohre 40, 41 parallel geschaltet sind. Das erste Druckrohr 40 weist in der untersten Ebene zwei nicht verschlossenen Bohrungen 13, 13' auf. Bei dem zweiten Druckrohr 41 sind alle Bohrungen in der mittleren und oberen Ebene nicht verschlossen. Das zweite Druckrohr ist mit dem ersten Druckrohr in der ersten, zweiten und dritten Ebene über die entsprechenden Bohrungen verbunden, so daß in jeder Ebene ein gemeinsamer Rohwasser-, Konzentrat- und Permeatstrom gebildet ist.

Im Betrieb wird dem ersten Druckrohr über die Zuleitung Z Rohwasser zugeleitet, wobei wie bei dem in Fig. 1 gezeigten Druckrohr das Konzentrat in der zweiten Ebene und das Permeat in der dritten Ebene abgeleitet werden. Ein Teil des die Membran des ersten Druckrohres 40 umströmenden Rohwassers wird über die Bohrung 13'abgeleitet und in das mit dieser über die entsprechende Bohrung 13 verbundene zweite Druckrohr 41 abgeleitet, wo es die in diesem angeordnete Membran ebenfalls von unten nach oben durchströmt. Über die miteinander verbundene Bohrungen in den jeweiligen anderen Ebenen können Konzentratstrom und Permeatstrom der Druckrohre jeweils gemeinsam abgeleitet werden.

Die Erfindung erlaubt somit die Aneinanderreihung von mehreren Druckrohren in einer Serien- oder einer Parallelschaltung ohne zusätzliche Verrohrung.

## Patentansprüche

1. Vorrichtung zur Aufbereitung einer Flüssigkeit, insbesondere von Wasser, mit
einem rohrförmigen Gehäuse (1; 30, 31; 40, 41), in dem ein im wesentlichen zylindrisches Membranmodul (5) zum Trennen der Flüssigkeit in Permeat und Konzentrat angeordnet ist,
einer Zuleitung (Z) für die Flüssigkeit,
einer ersten Ableitung (K) für das Konzentrat und
einer zweiten Ableitung (P) für das Permeat,
wobei das rohrförmige Gehäuse an einem Ende (2) geschlossen ist und die Zuleitung und die erste und die zweite Ableitung im Bereich des gegenüberliegenden Endes vorgesehen sind und die Zuleitung, die erste Ableitung und die zweite Ableitung relativ zueinander in einer ersten, einer zweiten und einer dritten Ebene liegen, und wobei an dem dem geschlossenen Ende des Gehäuses gegenüberliegenden Ende (3) eine Verteilervorrichtung (4) vorgesehen ist, **dadurch gekennzeichnet, daß** in der Verteilervorrichtung (4) die Flüssigkeit in den drei Ebenen fließen kann und daß jede Ebene mit wenigstens einer der Zu- bzw. Ableitung verbunden ist, und
wobei die Zu- und Ableitungen an der Verteilervorrichtung (4) umfangsseitig relativ zur Gehäuselängsachse vorgesehen sind,
wobei
in Umfangsrichtung in jeder Ebene wenigstens zwei Bohrungen (13, 13'; 14, 14'; 15, 15') vorgesehen sind.

2. Vorrichtung nach Anspruch 1, **dadurch gekennzeichnet, daß** die Zu- bzw. die Ableitungen an der Verteilervorrichtung umfangsseitig alle an einer Seite übereinander angeordnet sind.

3. Vorrichtung nach Anspruch 1 oder 2, **dadurch gekennzeichnet, daß** durch die Verteilervorrichtung und das Membranmodul in dem Gehäuse drei in radialer Richtung aneinandergrenzende sich ringförmig um die Mittenachse erstreckende Ringräume (18, 19, 20) für das aufzubereitende Wasser, das Konzentrat und das Permeat gebildet sind.

4. Vorrichtung nach Anspruch 3, **dadurch gekennzeichnet, daß** die Verteilervorrichtung so ausgebildet ist, daß der äußerste Ringraum (18) mit der Zuleitung (Z) für aufzubereitendes Wasser und mit der ersten Ableitung (K) für das Konzentrat und der innerste Ringraum (20) mit der zweiten Ableitung (P) für das Permeat verbunden ist.

5. Vorrichtung nach Anspruch 3 oder 4, **dadurch gekennzeichnet, daß** jeder Ringraum mit einer Ebene verbunden ist.

6. Vorrichtung nach einem der Ansprüche 1 bis 5, **dadurch gekennzeichnet, daß** die Verteilervorrichtung ein Teil des Gehäuses ist mit Bohrungen (13, 14, 15) für die Zu- bzw. Ableitungen und mit Dichtelementen (16, 17) zum Abdichten der Ebenen und der Zu- bzw. Ableitungen gegeneinander.

7. Vorrichtung nach einem der Ansprüche 1 bis 6, **dadurch gekennzeichnet, daß** die Zu- bzw. Ableitungen mittels einer Steckverbindung an dem Gehäuse befestigt sind.

## Claims

1. Device for the treatment of a liquid, in particular of water, with a tubular housing (1; 30, 31; 40, 41), in which is arranged an essentially cylindrical membrane module (5) for separating the liquid into permeate and concentrate, with a supply conduit (Z) for the liquid, with a first discharge conduit (K) for the concentrate and with a second discharge conduit (P) for the permeate, the tubular housing being closed at one end (2), and the supply conduit and the first and second discharge conduits being provided in the region of the opposite end, and the supply conduit, the first discharge conduit and the second discharge conduit lying in relation to one another at a first, a second and a third level, and a distributor device (4) being provided at the end (3) located opposite the closed end of the housing, **characterized in that** the liquid can flow at the three levels in the distributor device (4), and **in that** each level is connected to at least one of the supply and discharge conduits, and the supply and discharge conduits being provided on the distributor device (4) circumferentially in relation to the housing longitudinal axis, at least two bores (13, 13'; 14, 14'; 15, 15') being provided in the circumferential direction at each level.

2. Device according to Claim 1, **characterized in that** the supply and discharge conduits are all arranged on the distributor device circumferentially one above the other on one side.

3. Device according to Claim 1 or 2, **characterized in that** the distributor device and the membrane module form in the housing three annular spaces (18, 19, 20) which are contiguous to one another in the radial direction and extend annularly around the centre axis and which are intended for the water to be treated, the concentrate and the permeate.

4. Device according to Claim 3, **characterized in that** the distributor device is designed in such a way that the outermost annular space (18) is connected to the supply conduit (Z) for water to be treated and to the first discharge conduit (K) for the concentrate and the innermost annular space (20) is connected to the second discharge conduit (P) for the permeate.

5. Device according to Claim 3 or 4, **characterized in that** each annular space is connected to one level.

6. Device according to one of Claims 1 to 5, **characterized in that** the distributor device is part of the housing, with bores (13, 14, 15) for the supply and discharge conduits and with sealing elements (16, 17) for sealing off the levels and the supply and discharge conduits relative to one another.

7. Device according to one of Claims 1 to 6, **characterized in that** the supply and discharge conduits are fastened to the housing by means of a plug connection.

## Revendications

1. Dispositif destiné au traitement d'un liquide, notamment d'eau, comportant
un boîtier tubulaire (1 ; 30, 31 ; 40, 41) dans lequel est disposé un module à membrane (5) sensiblement cylindrique pour la séparation du liquide en permeat et en concentrat,
une conduite d'alimentation (Z) pour le liquide,
une première conduite d'évacuation (K) pour le concentrat, et
une deuxième conduite d'évacuation (P) pour le permeat,
le boîtier tubulaire étant fermé sur l'une de ses extrémités (2), et la conduite d'alimentation, ainsi que la première et la deuxième conduite d'évacuation étant prévues dans la zone de l'extrémité opposée, et la conduite d'alimentation, la première et la deuxième conduite d'évacuation étant situées les unes par rapport aux autres dans un premier plan, un deuxième plan et un troisième plan, et un dispositif de répartition (4) étant prévu sur l'extrémité (3) du boîtier opposée à l'extrémité fermée, **caractérisé en ce que** le liquide peut circuler dans les trois plans dans le dispositif de répartition (4), et **en ce que** chaque plan est relié à au moins une conduite d'alimentation ou d'évacuation, les conduites d'alimentation et d'évacuation étant prévues sur la périphérie du dispositif de répartition (4) par rapport à l'axe longitudinal du boîtier,
au moins deux perçages (13, 13' ; 14, 14' ; 15, 15') étant prévus dans la direction périphérique de chaque plan.

2. Dispositif selon la revendication 1, **caractérisé en ce que** les conduites d'alimentation ou d'évacuation sont toutes disposées les unes au-dessus des autres d'un seul côté de la périphérie du dispositif de répartition.

3. Dispositif selon la revendication 1 ou 2, **caractérisé en ce que** le dispositif de répartition et le module à membrane forment dans le boîtier trois espaces annulaires (18, 19, 20) pour l'eau à traiter, le permeat et le concentrat, qui sont contigus dans la direction radiale, et s'étendent en forme d'anneau autour de l'axe médian.

4. Dispositif selon la revendication 3, **caractérisé en ce que** le dispositif de répartition est agencé de telle sorte que l'espace annulaire le plus extérieur (18) soit relié à la conduite d'alimentation (Z) pour l'eau à traiter et à la première conduite d'évacuation (K) pour le concentrat, et que l'espace annulaire le plus à l'intérieur (20) soit relié à la deuxième conduite d'évacuation (P) pour le permeat.

5. Dispositif selon la revendication 3 ou 4, **caractérisé en ce que** chaque espace annulaire est relié à un plan.

6. Dispositif selon l'une quelconque des revendications 1 à 5, **caractérisé en ce que** le dispositif de répartition est une partie du boîtier, comportant des perçages (13, 14, 15) pour les conduites d'alimentation ou d'évacuation, et des éléments d'étanchéité (16, 17) pour assurer l'étanchéité des plans et des conduites d'alimentation ou d'évacuation les uns par rapport aux autres.

7. Dispositif selon l'une quelconque des revendications 1 à 6, **caractérisé en ce que** les conduites d'alimentation ou d'évacuation sont fixées sur le boîtier au moyen d'une liaison par emmanchement.
